# EUROPEAN PATENT SPECIFICATION

(11) **EP 2 540 155 B1**
(45) Date of publication and mention of the grant of the patent: **09.04.2014**
(21) Application number: 11172359.9
(22) Date of filing: 01.07.2011
(51) Int. Cl.: A01G 27/02

(54) **Self-watering pot assembly for plants**
Selbstbewässerungstopfanordnung für Pflanzen
Ensemble de pot à arrosage automatique pour plantes

(43) Date of publication of application: 02.01.2013
(73) Proprietor: Ormazabal Ochoa de Chinchetru, Ignacio, 01196 Legarda (ES)
(72) Inventor: Ormazabal Ochoa de Chinchetru, Ignacio, 01196 Legarda (ES)
(74) Representative: ZBM Patents - Zea, Barlocci & Markvardsen

(56) References cited:
- US-A- 2 387 340
- US-A- 5 852 896

## Description

The present invention relates to pots for plants and more particularly to pots of the self-watering type for automated watering of plants and the like.

### BACKGROUND ART

The soil or growing substrate in which plants or flowers are typically potted should be adequately moist by timely providing a suitable amount of water or a suitable liquid. Whether it is for pot gardening or for just a few house plants, watering usually becomes a problem, especially in plants that need to be watered everyday or very often, as it is a very exhaustive and time consuming task.

Watering is also a delicate operation. If a plant is forgotten to water, or if the amount of water is not correct, or even if water operation is not carried out at the proper time of day, the plant can be easily killed. For example, an inconsistent watering, e.g. overwatering, may lead air to be forced from the root of the plant thus reducing the plant's oxygen supply. It is therefore necessary to check often enough the moisture level of the soil.

Self-watering pots constitute a good solution for ensuring an accurate and timely watering operation especially when there is no enough time to take care of the plants. This can be applied to a wide variety of plants, including flowers, small indoor-type shrubs, or even herbs, etc.

In this respect, many self-watering solutions have been proposed in the prior art for plant pots. A simple known solution is providing a pot with a built-in trough that allows water to be added to the bottom. Water is then absorbed into the soil gradually. However, a disadvantage with this solution is that excess water usually attracts insects. As an alternative, wick watering devices are also used in the art that employ capillary action of high absorbency wicks to draw water into the soil of the pot. A wick helps the water to make its way to the soil above. However, wick watering requires inserting the wick into the soil through the bottom into an adequate depth which is not always an easy operation for water to be properly supplied to the plant roots.

Other solutions known in the art for automatically watering plants consist of water absorbing mats fitted to the bottom of the pot onto which soil is potted for the plant as well as the use of gel crystals that can absorb a high amount of water when used as a soil additive. Still further commonly used self-watering solutions are soaker hoses, drip irrigation, etc. They are used mainly for large-scale plantation systems.

One successful solution for self-watering potted plants is a pot assembly that comprises an inner pot provided with openings and an outer pot arranged such that it at least partially surrounds the inner pot and it is in fluid communication thereto through said openings. Between the inner and outer pots a chamber is defined for containing water to be supplied to the inner pot. Examples of this chamber-based solution are disclosed in US patent documents US2003106262, US4885870, US6276090 and US3753315, the European patent application EP2269443 as well as the international patent applications WO2004089064 and WO2009030019.

US5852896 discloses a container for plants comprising an outer wall and an inner wall between which a space is defined. Soil is rests on a perforated floor having multiple drain holes so that ambient air can enter through holes in the bottom of container and enter soil.

US2387340 refers to a humidified flowerpot or container having an outer wall and an inner wall between which a space is defined. A partition horizontal wall is provided at a distance of the base and of opening in the outer wall allowing free circulation of air underneath the inner wall.

The above known solutions are not without drawbacks. The main problem in known self-watering pots is concerned with the distribution of moisture such that plants are properly hydrated. A further problem with prior art self-watering pots is noncompatibility with standard pots already existing in the market. This noncompatibility results in that a completely new design has to be created for defining an arrangement in which a chamber is created and which can operate together with existing standard pots available in the market. This also leads to undesirable high manufacturing complexity as it involves a great number of parts which adversely affects final costs.

### SUMMARY OF THE INVENTION

The invention provides a self-watering pot assembly for plants with which the above disadvantages can be at least reduced. Although a pot assembly for plants is provided, the present assembly is by no means limited to such particular application and it can be used for any other application which involves an automatic watering of a substrate and the like.

The present self-watering pot assembly comprises an outer pot. This outer pot can be made integral, i.e. as a single unit, or it may comprise a number of parts, such as a plurality of outer walls, for example four, that can be articulated on corresponding hinge shafts. Such plurality of outer walls can be therefore pivoted in order to access the interior of the outer pot.

The outer pot is shaped such it has at least one inner cavity. A number of first openings are formed in the outer pot suitable for delivering watering liquid into said inner cavity. More specifically, said first openings are formed in the side surface of the walls of the outer pot defining the inner cavity.

The inner cavity of the outer pot is opened, preferably at the upper portion thereof, and it is sized and shaped for at least partially receiving an inner pot. As used herein, a pot is meant a container that is suitable for receiving for example a plant, soil (growing substrate), watering liquid, etc. and parts of the assembly where required. The inner pot than can be received into the inner cavity of the outer pot may be any pot, for example, a common, commercially available pot intended for flowers, plants or the like with its soil or growing substrate therein.

According to the invention, the outer pot further includes an interior that can be provided, for example, surrounding the inner cavity. In this interior of the outer pot a tray structure is provided. This tray structure comprises a number of trays that are arranged horizontally, one above the other, such that the interior of the outer pot is divided into a number of sub-chambers, such as at least two. Sub-chambers are arranged at different levels for supplying watering liquid towards the inner cavity of the pot assembly at different heights through the above mentioned first openings formed in the outer pot. In some embodiments of the pot assembly, the trays can be fixedly or releasably arranged inside the pot through any known means.

A tray structure as used herein is a structure comprising at least two trays arranged horizontally one above the other as stated, in the interior of the outer pot. The sub-chambers of the outer pot formed by said trays are suitable for containing a proper amount of watering liquid, and in general any suitable liquid. Hydrostatic pressure in each of the sub-chambers causes the watering liquid to be supplied at different heights into the inner cavity of the outer pot through said openings. Watering liquid is therefore delivered into the inner pot for watering the plant of plants potted therein.

It if preferred that the trays of the tray structure inside the outer pot are in the form of bands, for example circular bands in the case of cylinder or cone shaped outer pots, having an aperture formed therein in correspondence with the inner cavity. Trays are therefore sized and shaped to conform to the interior of the outer pot. Other shapes for the trays such as polygonal can be used where outer pots with polygonal base are employed. Still other shapes are not ruled out, such as curved shapes for outer pots having a curved base other than circular, or combinations thereof.

The pot assembly may further include the above mentioned inner pot. As stated above, the inner pot may be any standard pot for plants and the like that can be inserted with no or little modifications. A standard, commercially available inner pot can be thus received into the inner cavity of the outer pot such that the inner pot is at least partially surrounded by the outer pot. In this position where the inner pot is received into the inner cavity of the outer pot, the inner pot and the outer pot are in fluid communication therewith through their respective openings, i.e. the first openings formed in the outer pot and the second openings formed in the inner pot in correspondence therewith. The second openings, like the first openings, are through openings and they are in size and number suitable for allowing passage of watering liquid therethrough. In some embodiments of the pot assembly, at least the first or the second openings are in the form of half funnel for promoting the passage of watering liquid therethrough.

It is therefore important for the purposes of the present invention that shape, size and general construction of the outer pot with the tray structure therein conforms to the general configuration of standard pots existing in the market so none or minimal adaptation is required. This means that the outer pot is such that it is capable of easily receiving a standard pot. This feature will enable an extended use of the pot assembly with reduced costs. However, it is also envisaged the use of the present pot assembly for any other pots regardless their size and construction which can be fitted into the outer pot through the use of suitable adapters.

In some embodiments the pot assembly may further comprise valve means for allowing controlled supply of the liquid to the inner cavity through the openings. For reducing modifications in standard inner pots, it is preferred that the valve means are provided in the outer pot such that they are associated with the sub-chambers. The valve means could however be provided in the inner pot, of both in the inner pot and the outer pot if required.

It is also preferred that the valve means are operated by the hydrostatic pressure of the watering liquid that is present in the respective sub-chamber with which the valve means are associated. In some embodiments of the pot assembly, the valve means may comprise at least one drop-by-drop valve. The drop-by-drop valves may be such that they are capable of providing a regular flow rate of watering liquid, that is, a constant dripping. Alternatively, the drop-by-drop valve may be such that they are capable of providing a variable flow rate of watering liquid.

In one example of the above mentioned valve means, they comprise at least one tongue adapted for allowing passage of watering liquid into the inner cavity only when the inner pot is at least partially inserted into the inner cavity of the outer pot. In preferred embodiments of the present pot assembly, tongues will be as many as openings are provided in the inner and/or outer pots. In the most preferred embodiment of the pot assembly of the invention, tongues are provided in the outer surface of the inner pot, in correspondence, in number and/or distribution, with the first openings thereof. However, tongues could be alternatively or additionally formed in the outer pot. It is also preferred that tongues are made of a flexible material such that at least one portion thereof can be at least partially folded as the inner pot is fitted into the inner cavity of the outer pot. When at least one portion of the tongue is at least partially folded by the at least partial insertion of the inner pot, the passage of watering liquid between the openings, that is from the outer pot into the inner pot, is allowed thus watering the plant in the inner pot. In some embodiments of the invention, it has been shown that this can be successfully achieved by providing flexible tongues comprising a first length extending into a second length. The second length of the tongue is suitably adapted for being folded on the first length as the inner pot is inserted into the inner cavity of the outer pot. This causes the inner and outer pots to be in fluid communication with each other when the former is at least partially fitted or inserted into the latter so that watering liquid is delivered from sub-chambers of the outer pot to the interior of the inner pot where the plant is potted.

The outer pot may be further provided with at least one top cover that may be integral, that is a single unit, element made of a rigid material that is press fitted on or screwed about the outer edge of the outer pot, or it may be formed with two or more parts, for example two pivotable portions. The top cover may have an inlet for filling the outer pot with the watering liquid. In some embodiments, the inlet may be a hollow member such as a tube extending into the outer pot and it may be provided with filter means.

The outer pot may further comprise watering liquid adjusting means for controlling the amount of watering liquid supplied to each sub-chamber inside the outer pot. The watering liquid adjusting means may comprise, for example, the above hollow member or tube that is fitted through the top. The hollow member or tube is arranged such that it projects inside of the outer pot through the trays in the different sub-chambers. Hollow tube is provided with a number of outlets formed therein communicating at least some of the sub-chambers with each other. Through said outlet, excess watering liquid present in one tray passes into a tray arranged below. The hollow tube is adapted for being raised and lowered, for example by being rotated, i.e. by screwing it, in order to precisely adjust the height at which the outlets are and thus to adjust the watering liquid that is being supplied. Rotation of the tube can be performed manually by the user or even automatically through the use of, for example, an automatic actuator in conjunction with a timer if necessary.

In some embodiments of the pot assembly, the watering liquid adjusting means may be further provided with a drain valve for enabling or disabling the supply of watering liquid to the sub-chambers.

The pot assembly may further comprise a level indicator for monitoring the level of watering liquid inside the outer pot. This level indicator may be in the form of a level rod for ease of visibility of the watering liquid level from the outside. Alternatively or in combination with the level rod, the level indicator may comprise liquid level sensors of the ultrasonic or magnetic type. A LED indicator for watering liquid level may be also provided.

In some embodiments of the pot assembly, at least one liquid reservoir chamber may be formed at the bottom of the outer pot. This liquid reservoir chamber is suitable for promoting moisture of plants inside the inner pot. A small tube can be also provided for facilitating drawing of residual drain liquid that could be formed at the bottom of the assembly.

If required, the pot assembly may further include an outer support member arranged for receiving the outer pot.

A useful and highly effective pot assembly is thus obtained which provides an intuitive self-watering operation with which moisture can be efficiently and evenly distributed throughout the soil due to irrigation from different levels as required. This results in that potted plants can be kept properly hydrated with constant moisture so that plants are fed with a proper amount of watering liquid as required.

A further advantage of the disclosed pot assembly is that it is highly compatible with existing pot assemblies with a very simple construction. The parts of the present pot assembly can be produced in a standardized manner and under the current industry standards relating to sizes and shapes. In addition, cleaning of the parts of the pot assembly is made easier due to the simplicity in assembling and disassembling operations.

Additional objects, advantages and features of embodiments of the present pot assembly will become apparent to those skilled in the art upon examination of the following description.

### BRIEF DESCRIPTION OF THE DRAWINGS

Particular embodiments of the present invention will be described in the following by way of non-limiting examples, with reference to the appended drawings, in which:
Figure 1 is an elevational view of a standard inner pot in which a plurality of openings has been formed on its side surface and inside of which a plant is potted;
Figure 2 is an elevational view of one embodiment of a self-watering pot assembly for plants according to the invention including an outer support member inside of which the outer pot is fitted and including the standard inner pot in figure 1, with no plant potted therein, fitted inside the outer pot;
Figure 3 is a sectional view of a variant of the embodiment of the self-watering pot assembly in figure 2 in which no outer support member is provided;
Figure 4 is a top plan view of the self-watering pot assembly for plants in figure 3;
Figure 5 is an elevational view of one embodiment of the self-watering pot assembly of the invention in which the outer pot has a number of inner cavities formed therein for receiving a corresponding number of standard inner pots;
Figure 6 is a top plan view of the embodiment in figure 5;
Figure 7 is an elevational view of an alternative embodiment of the self-watering pot assembly of the invention in which the top cover comprises pivotable portions and a plurality of articulated walls for accessing the interior of the outer pot;
Figure 7a is an elevational view of the self-watering pot assembly of the invention in which an alternative embodiment of the watering liquid adjusting means is shown;
Figure 7b shows the alternative embodiment of the watering liquid adjusting means in figure 7a fitted in the self-watering pot assembly corresponding to the embodiment shown in figure 3;
Figure 8 is an enlarged detail view of the valve means;
Figure 9 is a top plan view of another embodiment of the pot assembly in which the inner pot can be locked to the outer in different relative angular positions;
Figure 10 is a top plan view of figure 7;
Figures 11 and 12 are top plan views of a particular embodiment of the pot assembly of figure; and
Figure 13 is an enlarged detail view of a general embodiment of the valve means of the pot assembly.

### DETAILED DESCRIPTION OF EMBODIMENTS OF THE INVENTION

Non-limiting examples of a self-watering pot assembly for plants are shown in the figures and disclosed herein. In the drawings, like reference numerals designate corresponding parts throughout the views of the embodiments shown.

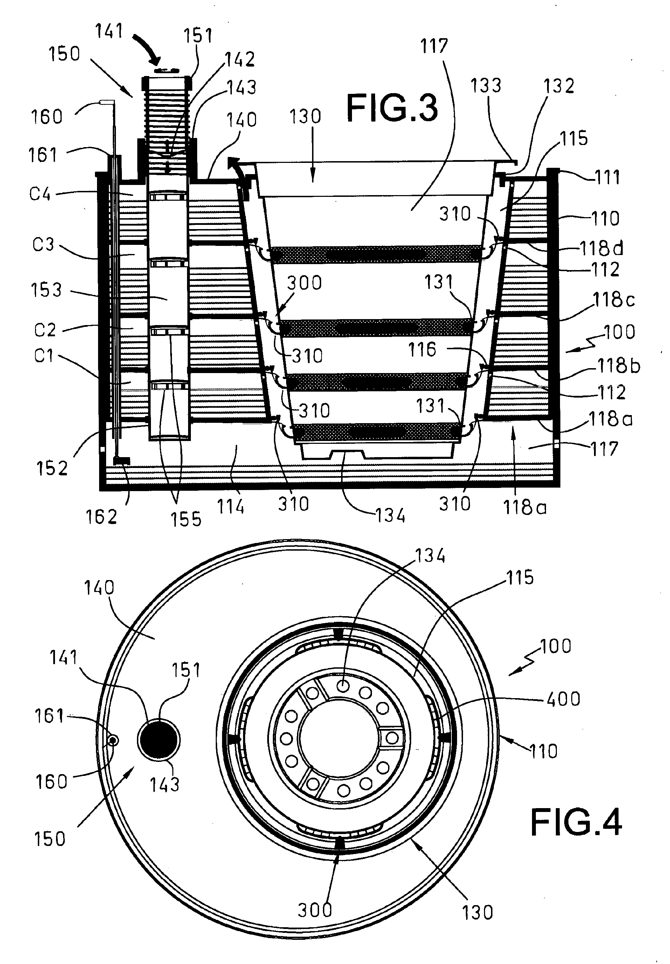

The present self-watering pot assembly has been indicated herein at 100 as a whole. The most general embodiment of the pot assembly 100 comprises an outer pot 110 consisting of a hollow receptacle having an inner cavity 115. This inner cavity 115 may be provided at a central portion of the outer pot 110, but other locations are possible. See, for example, the embodiment shown in figure 4 in which the inner cavity 115 is provided in an off-centred position for accommodating other elements in the outer pot 110. In the embodiment shown in the figures, the inner cavity 115 of the outer pot 110 is substantially cone shaped although other embodiments are possible having different shapes. Flowers, plants 200 and the like can be potted, that is fitted, with the corresponding growing substrate, directly into the inner cavity 115 of the outer pot 110.

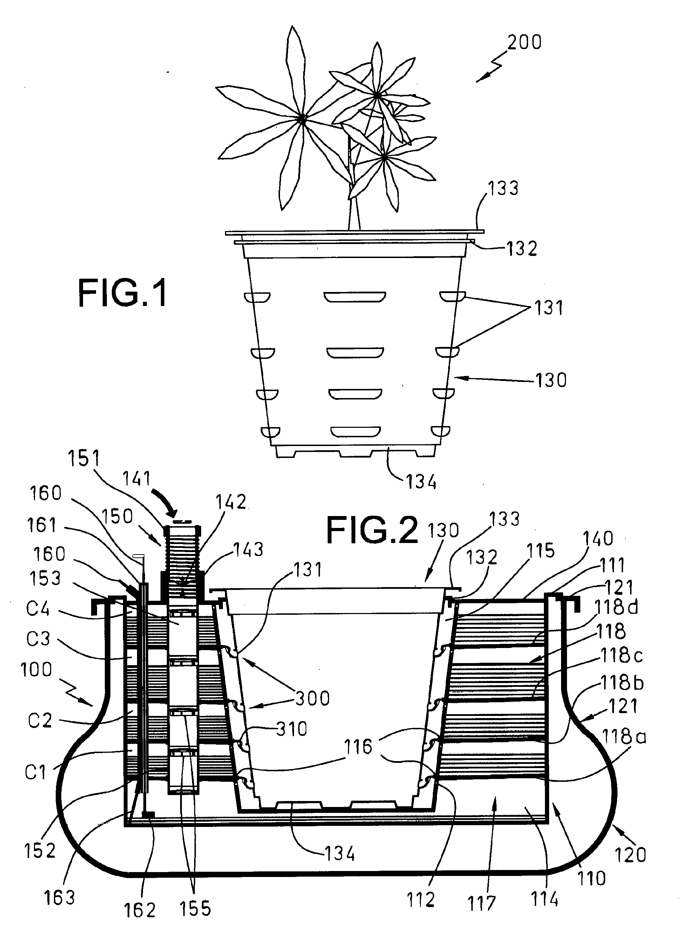

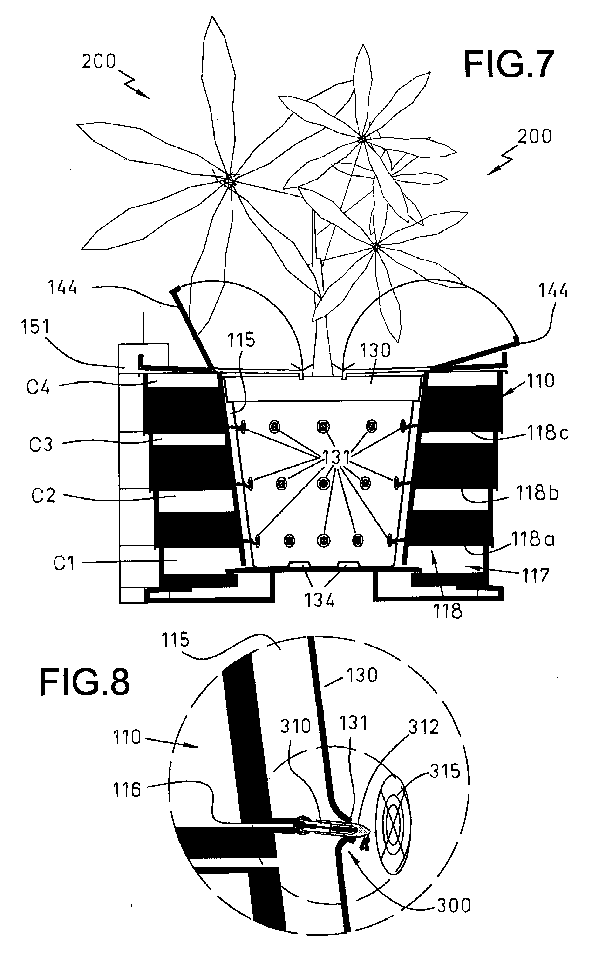

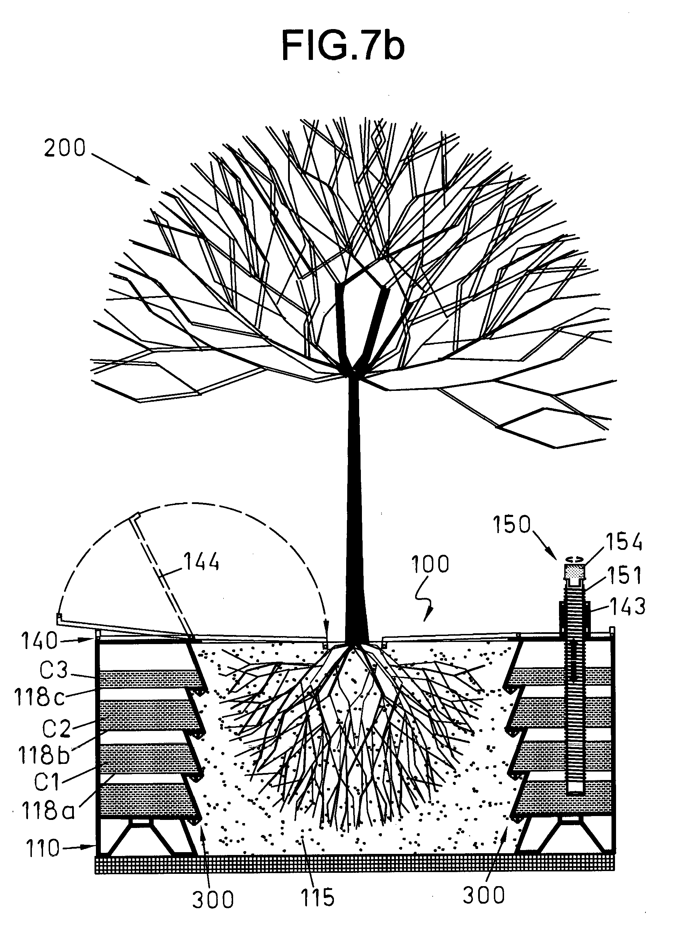

In the embodiment shown in figure 2 of the drawings, the pot assembly 100 further includes a standard inner pot 130 as the one depicted in figure 1. However, as stated above and as depicted in the embodiment shown in figure 7b, the pot assembly 100 could be devoid of the inner pot.

In the embodiment of figure 2, the pot assembly 100 further includes an outer support member 120 inside of which the outer pot 110 is fitted. The outer support member 120 therefore supports the outer pot 110. In other embodiments such as the one depicted in figures 3, 7, 9, the outer support member 120 could not be present.

The outer pot 110 of the pot assembly 100 is made, for example, of plastics and it has its inner cavity 115 opened at its upper portion in order to suitably receive the standard inner pot 130, see figures 2 and 3 of the drawings. Suitable plastic materials for the manufacture of the outer pot 110 may be, for example, methacrylate, polycarbonates and variants thereof, glass, vitreous (glazed) inner surface porcelains, and different types of plastics, metals, etc. The outer pot 110 could be provided with a decorative outer surface since, in some embodiments, the outer surface of the outer pot 110 is the outermost surface of the pot assembly 100 as in figure 3 of the drawings as stated above. As shown in figures 2 and 3, the outer pot 110 is provided with a first radial upper projection 111 that projects outwards of the top edge of the outer pot 110. The first radial upper projection 111 serves the purpose of allowing the outer pot 110 to rest on a top edge 121 of the outer support member 120.

As stated above, the inner pot 130 is a standard inner pot 130, that is, a pot widely available in the market and, in general, a common receptacle for receiving flowers, plants 200 and/or the like with the corresponding growing substrate. Users may therefore employ existing pots for the pot assembly 100 of the invention by simply fitting the standard pot 130 it into the inner cavity 115 of the outer pot 110.

This standard inner pot 130 can be made of plastics injection moulding although other materials and manufacturing processes are possible. As shown in the example of the inner pot 130 in figure 1, only a number of openings (second openings 131) should be formed on its side surface (in the event the pot 130 is not provided with openings) so that pots 110, 130 are in fluid communication with each other through respective openings 116, 131.

As further shown in the example of figure 1, the inner pot 130 may be further provided with a second radial projection 132 that projects outwards of the top edge of the inner pot 130. The second radial projection 132 serves the purpose of allowing the inner pot 130 to rest on a top edge of the outer pot 110. The inner pot 130 is also provided with a third radial projection 133 for proper handling.

The standard inner pot 130 shown is further provided with lower draining holes 134. An inner mesh can be also arranged covering the inner surface of the inner pot 130 for preventing roots from growing outside the inner pot 130.

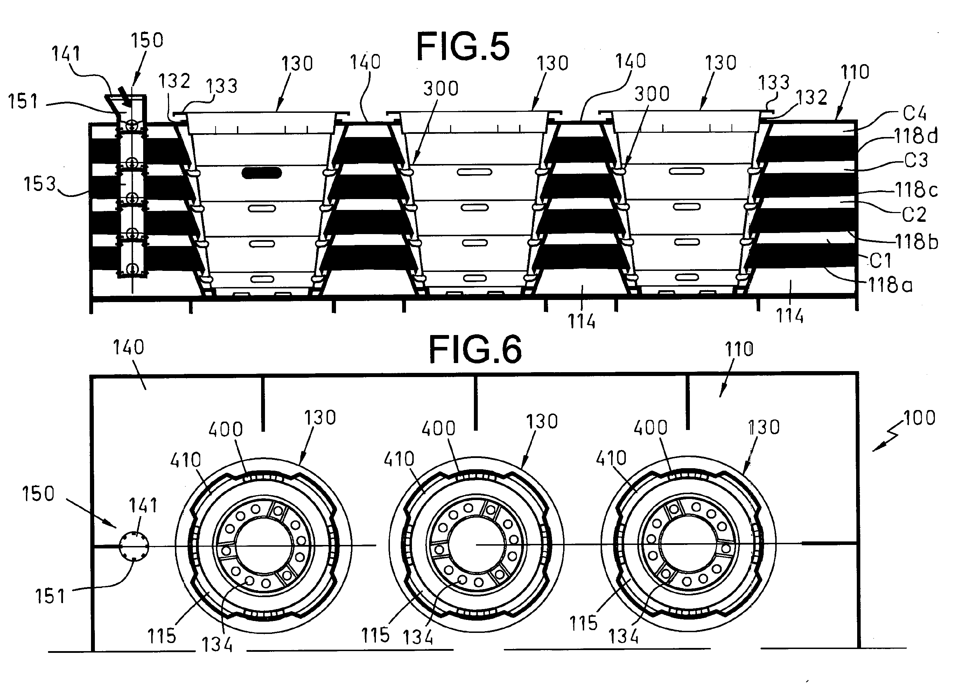

More in detail and as stated above, the outer pot 110 of the pot assembly 100 includes the inner cavity 115 shown in figures 2 and 3. However, in some embodiments such as the one shown in figures 5 and 6 of the drawings, the outer pot 110 may include a number of inner cavities 115, such as three as in the exemplary embodiment shown in said figures 5 and 6. Plural inner cavities 115 allow corresponding plural inner pots 130 to be received therein. In the embodiment shown in figures 5 and 6 in which the outer pot 110 has plural inner cavities 115 watering is performed through common watering liquid adjusting means 150, that will be described further below, for suitably adjusting the supply of watering liquid from the outer pot 110 into the plural inner pots 130. However, multiple watering liquid adjusting means 150 could be provided for watering plants individually if required.

This particular embodiment of the pot assembly 110 arranged as an unitary assembly allows a number of standard pots 130 with their respective flowers or plants 200 potted therein to be automatically watered. This embodiment is particularly useful for example in supermarkets, shopping centres or nurseries where space is important as well as in keeping plants in good conditions and in a way that they can be easily controlled and manipulated.

The outer pot 110 is a hollow structure inside of which an inner space 117 is defined. A tray structure 118 is provided in said inner space 117 of the outer pot 110. The tray structure 118 comprises a number of trays 118a, 118b, 118c. Trays 118a, 118b, 118c are in the form of circular bands having a corresponding configuration defined by the configuration of the inner space 117 of the outer pot 110 and with a central opening in correspondence with the inner cavity 115 of the outer pot 110. Other shapes are of course possible according to the general configuration of the outer pot 110. Trays 118a, 118b, 118c are arranged horizontally, one above the other, as shown in the figures 2, 3, 5, 7, 9. The inner space 117 of the outer pot 110 is thus divided into a corresponding number of sub-chambers C1, C2, C3, C4 arranged at different levels, one above the other, as shown in the drawings. Sub-chambers C1, C2, C3, C4 are adapted for containing watering liquid to be supplied towards the inner cavity 115 and therefore to the inner pot 130 at different heights. Although four sub-chambers C1, C2, C3, C4 are shown, the number of sub-chambers C1, C2, C3, C4 can be of course different according to the requirements. Separation between the sub-chambers C1, C2, C3, C4 can be the same or different as required.

In the embodiment shown in the drawings, vent holes 112 are provided in each of the sub-chambers C1, C2, C3, C4. Vent holes 112 are located at a top portion of the wall facing the inner cavity 115 of the outer pot 110.

Sub-chamber filling operation can be performed between relatively long periods of time due to enhanced watering liquid distribution into the inner pot 130 where the plant 200 is potted.

As stated above, the sub-chambers C1, C2, C3, C4 are intended to contain watering liquid. Watering liquid can be supplied from the sub-chambers C1, C2, C3, C4 of the outer pot 110 through the above mentioned first openings 116 formed therein and through corresponding second openings 131 formed in the inner pot 130 and into the inner cavity 115 and therefore into the inner pot 130. In some cases, the second openings 131 in the inner pot 130 can be sealed by a sealing film (not shown) attached on the outer surface of the inner pot 130. This allows the inner pot 130 to be used as a standard plant pot 130, that is, as a separate part of the pot assembly 100.

The first and second openings 116, 131 are through openings. Openings 116, 131 are half funnel shaped and distributed and sized such that evaporated and condensed watering liquid can be properly exchanged with the plant 200 for a suitable watering. Watering liquid transfer from the outer pot 110 into the inner pot 115 through openings 116, 131 is produced by capillary action by hydrostatic pressure of the watering liquid in the sub-chambers C1- C4.

The number of first and second openings 116, 131 will be as required for a proper watering liquid supply. The first and second openings 116, 131 will correspond in number and distribution. As stated above, where the standard, commercially available inner pot 130 does not come with openings 131 in its side surface, they can be easy drilled according to openings 116 in the outer pot 110. In general, if the inner pot 130 is not of a standard configuration, suitable adapters (not shown) could be used for correct fitting of the inner pot 130 into the inner cavity 115. For example, a cylindrical spacer (not shown) could be provided inside the inner cavity 115 to properly support the inner pot 130 therein.

For a controlled supply of watering liquid to the inner cavity 115 and therefore to the flower or plant 200 potted in the inner pot 130a, the pot assembly 100 of the embodiment shown in the figures is provided with valve means 300. In this particular embodiment, the valve means 300 are provided in the outer pot 110 and are associated with each of the sub-chambers C1, C2, C3, C4 formed in the inner space 117 of the outer pot 110.

The valve means 300 are operated according to the hydrostatic pressure of the watering liquid that is present in each sub-chamber C1, C2, C3, C4. In the embodiment shown in the figures 2 and 3 of the drawings, the valve means 300 comprise drop-by-drop valves 310 suitable for providing the required watering liquid flow rate, whether it is regular or variable. The drop size the watering liquid supplied by the drop-by-drop valves 310 could be of the order of 30 - 200 µl depending on the type of plant 200, environmental factors, etc.

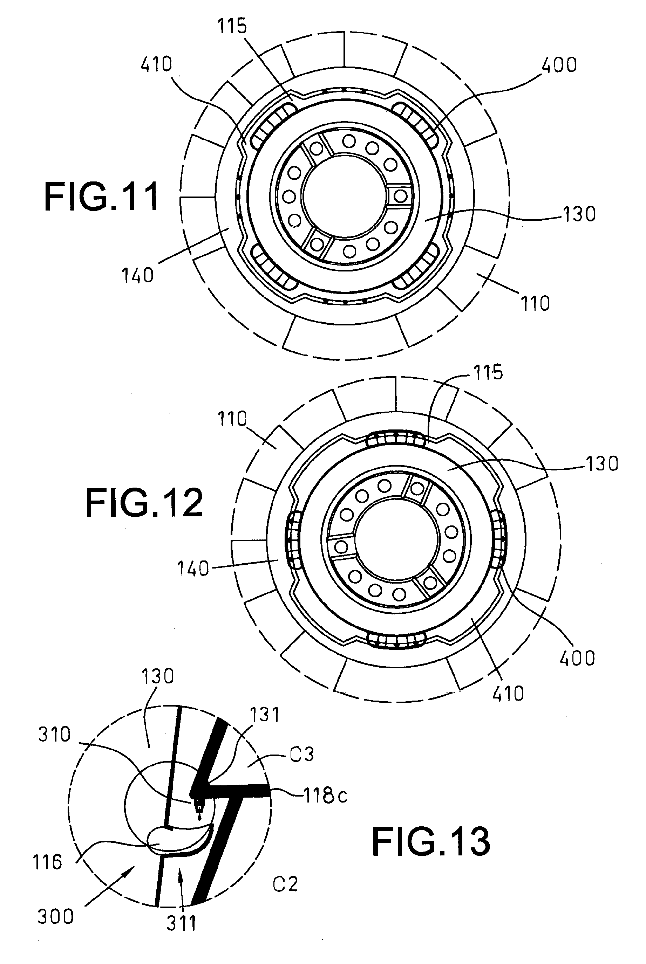

In the embodiment of the drop-by-drop valves 310 shown in the drawings, particularly in figure 13, they are in the form of tongues 311 provided in the outer surface of the inner pot 130 in correspondence with the first openings 116 of outer pot 110. A detail of one of such tongues 311 can be seen in said figure 13. Tongues 311 are funnel shaped and they are made of any suitable flexible material. Tongues 311 comprise a first length 311 a and a second length 311 b as shown in figure 13 of the drawings. The second length 311 b of the tongue 311 can be bent on the first length 311 a of the tongue 311 as the inner pot 130 is inserted into the inner cavity 115 of the outer pot 110. More specifically, as the inner pot 130 is inserted into the inner cavity 115 of the outer pot 110, the second length 311 b of the tongue 311 is folded upwards on the corresponding first length 311 a of the tongue 311 due to their flexible nature as the second length 311 b of the tongue 311 abuts on the outer surface of the outer pot 110. This causes the tongue 311 of the second opening 116 to be connected with a corresponding delivering tongue 320 of first opening 116 of outer pot 110 causing the inner and outer pots 130, 110 to be in fluid communication with each other. At this time, watering liquid droplets are transferred from sub-chambers C1-C4 to the growing substrate of plant 200 that is potted in the inner pot 130. This watering liquid transfer is made possible by the adjustable hydrostatic pressure resulting from the height of watering liquid in each sub-chamber C1-C4.

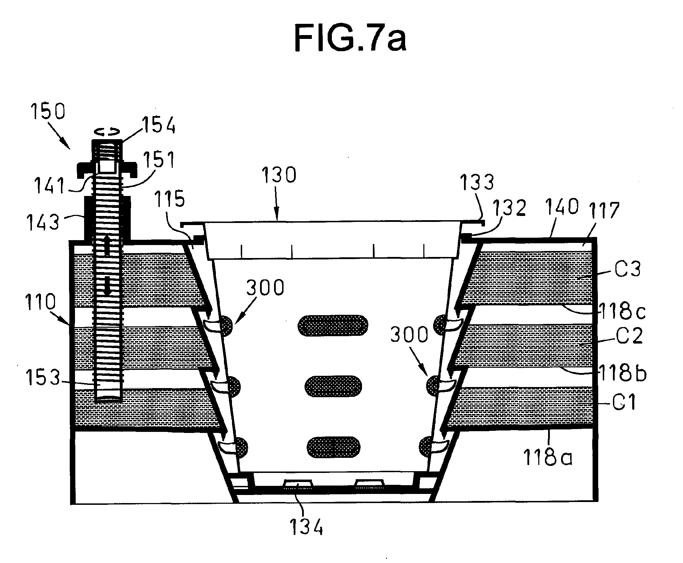

The outer pot 110 is also provided with a top cover 140. Top cover 140 may be a single piece as shown in the exemplary embodiments of figure 2 and 3 of it may comprise several parts. For example, in the particular embodiment shown in figures 7 and 7b, the top cover 140 comprises hinged cover members 144 suitable for covering the top of the inner pot 130 and for being pivoted upwards if required for accessing the plant 200. In other embodiments of the cover members 144, they could be drawer-like fitted by guided slides or press-fitted on the outer pot.

The top cover 140 has an inlet 141 for filling the outer pot 110 with watering liquid. Filter means 142 are provided inside the inlet 141. In the exemplary embodiment shown in figures 2, 3, 5 or 9, the inlet 141 for filling the outer pot 110 is formed in a hollow tube 151 that is part of a watering liquid adjusting means 150 which will be described further below.

According to the above, the plant 200 that is potted in the inner pot 130 can be watered by pouring watering liquid directly into the inner pot 130. However, if an efficient self-watering of plant 200 is desired, the inner pot 130 should be fitted into the inner cavity 115 of the outer pot 100. The outer pot 100 is filled with watering liquid through inlet 141 of tube 151. Watering liquid then goes to the sub-chambers C1, C2, C3, C4 inside outer pot 110 and then to the inner pot 130 through openings 116, 131.

The above supply adjusting means 150 serve the purpose of controlling the amount of watering liquid that is supplied from each sub-chamber C1, C2, C3, C4.

In the embodiments shown in the figures 2, 3 and 5 of the drawings, the watering liquid adjusting means 150 comprise the hollow tube 151. Hollow tube 151 is threaded on a cylindrical projection 143 formed on the top cover 140 as shown in figures 2 and 3. The hollow tube 151 is fitted inside the outer pot 110 passing through the cover 140, i.e. through the cylindrical projection 143. The hollow tube 151 projects inwards through trays 118a, 118b, 118c in sub-chambers C1, C2, C3, C4 of the interior 117 of the outer tube 110. The hollow tube 151 is provided with a number of outlets 155 formed at different heights in its side surface as shown in figures 2 and 3. Outlets 155 communicate the interior 153 of hollow tube 151 with at least some of the sub-chambers C1, C2, C3, C4 such that the excess of watering liquid present in one tray 118a, 118b, 118c can be passed into another tray 118a, 118b, 118c that is located in a lower position.

As stated above, the hollow tube 151 is screwed in the cylindrical projection 143 of the top cover 140. The tube 151 can be rotated manually by the user as required or automatically through the use of, for example, an automatic actuator in conjunction with a timer (not shown). Rotation of the hollow tube 151 thereabout, such as shown in figures 2 and 3, causes the tube 151 to be lowered or raised relative to the outer pot 110 depending upon the direction of rotation. Vertical movement of tube 151 allows the position of the outlets 155 to be accurately adjusted in height relative to the trays 118a, 118b, 118c. The amount of watering liquid in each sub-chamber C1, C2, C3, C4 can thus be precisely adjusted. For ensuring proper tightness a seal 152 is provided between the hollow tube 151 and the trays 118a, 118b, 118c, 118d.

Figures 7a, 7b show an alternative embodiment of the watering liquid adjusting means 150. In this alternative embodiment, the watering liquid adjusting means 150 comprise the hollow tube 151 that is threaded on the cylindrical projection 143 formed on the top cover 140 of the outer pot 110. The hollow tube 151 is fitted inside the outer pot 110 passing through the cover 140, i.e. through the cylindrical projection 143 and projects inwards through trays 118a, 118b, 118c.

In this particular embodiment of the figures 7a and 7b, the tube 151 is provided with a drain valve for enabling or disabling the supply of watering liquid to the sub-chambers C1-C4. In the embodiment shown in figures 7a and 7b, the drain valve comprises a top plug or cap 154. The top plug 154 has an inner thread so that it can be screwed on the outer thread of the upper portion of tube 151. The top plug 154 is shown as a particular embodiment of a drain valve and therefore it may have any other configuration, such as for example a handle or the like.

When the top plug 154 is fully screwed, that is, completely closing the inlet 141 no watering liquid is supplied to sub-chambers C1-C4. This is based on the principle of the Mariotte bottle when it behaves like a pipette: when pouring watering liquid from any sub-chamber C1-C4, the same volume of air should enter the tube 151 to the sub-chambers C1-C4 to replace the watering liquid being poured out. If no air is allowed to enter the tube 151, and hence the sub-chambers C1-C4, no watering liquid is therefore allowed to flow through openings 116 inside the outer pot 110 and hence to the plant 200. Rotation of the top plug 154 to the tube 151 may cause the inlet 141 thereof to be partially opened or closed. This allows the supply of watering liquid (drop rate) to the sub-chambers C1-C4 to be adjusted by the user as desired.

As a result, besides the adjusting of the watering liquid supply, this particular embodiment of the watering liquid adjusting means 150, with drain valve, provides the important feature of allowing the watering liquid supply to the sub-chambers C1-C4, and hence to the plant 200, to be cut off as desired.

As stated above, the hollow tube 151 is screwed in the cylindrical projection 143 of the top cover 140. The tube 151 can be rotated manually by the user as required or automatically through the use of, for example, an automatic actuator in conjunction with a timer (not shown).

As stated above, top cover 140 of the assembly 100 allows watering liquid adjusting means 150 to be fitted. The top cover 140 is also adapted for allowing the provision of a level indicator. In the exemplary embodiment shown in figure 2, for example, the level indicator comprises a level rod 160 that is fitted inside a graduated support tube 161. Level indicator 160-161 allows easy reading of the level of watering liquid inside the sub-chambers C1, C2, C3, C4. The level rod 160 is provided with a hinged float 162 fitted at a lower end thereof. The level rod 160 is therefore raised or lowered by means of float 162 by watering liquid level in sub-chambers C1, C2, C3, C4. Upper and lower ducts 163, 164 for leftover watering liquid are also provided in the exemplary embodiment shown in figure 2. In other embodiments, such as in figure 3, the pot assembly 100 has no such upper and lower ducts 163, 164.

A liquid reservoir chamber 114 is formed at the bottom in the inner space 117 of outer pot 110. The watering liquid that is present in reservoir chamber 114 provides extra humidity to plant 200.

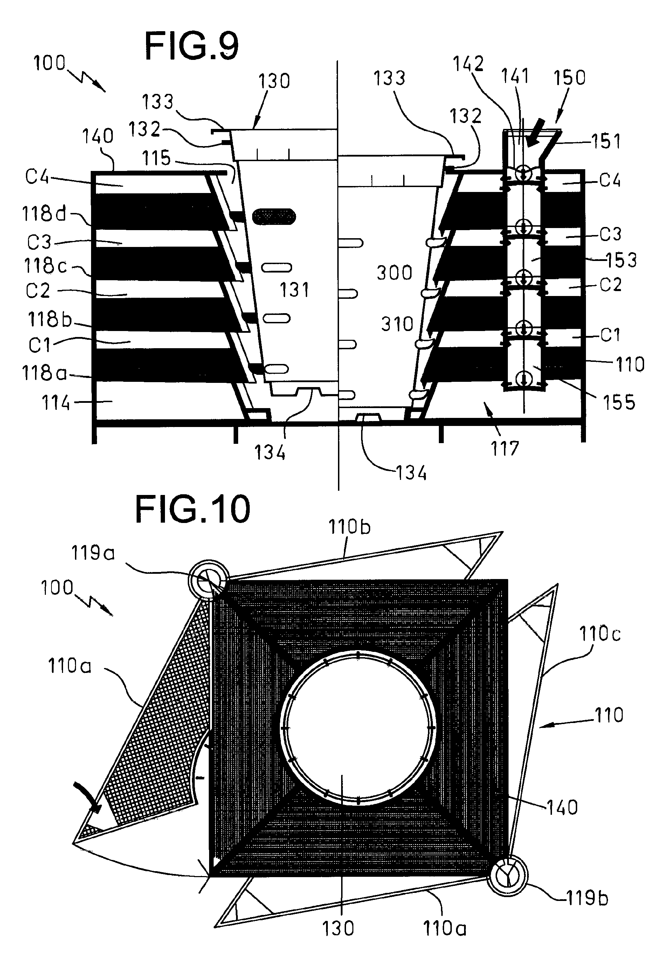

Figures 9, 11 and 12 show a particular embodiment of the pot assembly 100 for locking the inner pot 130 to the outer pot 110. For this purpose, the inner pot 130 is provided with a number of radially projecting segments 400, for example four in the particular embodiment shown in the figures 9, 11 and 12 of the drawings. Other suitable number of segments 400 may be of course provided, with two being the minimum for a proper locking the inner pot 130 to the outer pot 110. A corresponding number of radial recesses 410 are also formed in the outer edge of the outer pot 110.

In a given angular position of the inner pot 130 relative to the outer pot 110, segments 400 are allowed to pass through recesses 410 when at least partially inserting the inner pot 130 into the inner cavity 115 of the outer pot 110. Once the required degree of insertion of the inner pot 130 into the inner cavity 115 of the outer pot 110 is achieved, the inner pot 130 is rotated relative to the outer pot 110 around a vertical axis a given angle, e.g. 45° as shown in the figures 11 and 12, causing the inner pot 130 to be locked to the outer pot 110 such that the former can not be removed (i.e. raised) from the latter as the radially projecting segments 400 of the inner pot 130 abut the inner portion of the upper edge of the outer pot 110 or the top cover 140, if provided.

The rotational angle of inner pot 130 to outer pot 110 will be any depending on the angular length of the projecting segments 400 and the corresponding recesses 410. The degree to which the inner pot 130 should be inserted into the inner cavity 115 of the outer pot 110 will be such that inner and outer pots 130, 110, are in fluid communication through first and second openings 116, 131 for proper watering of the plant 200.

Figures 7 and 10 show a further alternative embodiment of the pot assembly 100. In this alternative embodiment, the outer pot 110 comprises four outer walls 110a, 110b, 110c, 110d. The outer walls 110a, 110b, 110c, 110d of the outer pot 110 are articulated on corresponding, opposite vertical hinge shafts 119a, 119b. In the exemplary embodiment shown, hinge shaft 119a is associated with outer walls 110a, 110b while hinge shaft 119b is associated with outer walls 110c, 110d. In this particular embodiment of the pot assembly 100, the inner pot 130 is first fitted into the pot assembly 110 with the outer walls 110a, 110b, 110c, 110d of the outer pot 110 pivoted outwards. The outer walls 110a, 11 0b, 110c, 110d are then pivoted inwards for closing the inner space 117 of the outer pot 110. As the outer walls 110a, 110b, 110c, 110d are pivoted inwards, the valves 310, which are provided with a protective cap 312 as shown in figure 8, are displaced towards the inner pot 130 causing the watering operation to be automatically started. A number of target points 315 are provided in the inner pot 130 to facilitate the insertion of the valves 310 therethrough. Target points 315 are provided in correspondence with the trays 118a, 118b, 118c, 118d inside the outer pot 110 as shown in said figure 8 of the drawings.

The disclosed construction allows an efficient multiple drip irrigation of plants 200 at different heights with which humidity can be efficiently controlled within the pot 130. This can be achieved with a simple and consequently low cost assembly.

Although several embodiments of the pot assembly have been disclosed herein, it will be understood by those skilled in the art that other alternative embodiments and/or uses of the invention and obvious modifications and equivalents thereof are possible. The present disclosure covers all possible combinations of the particular embodiments of the invention. Thus, the scope of the present invention should not be limited by the particular embodiments disclosed herein, but it should be determined only by a fair reading of the appended claims.

## Claims

1. A self-watering pot assembly (100) for plants (200), said assembly pot comprising an outer pot (110) having at least one inner cavity (115), the outer pot (110) having a number of first openings (116), the outer pot (110) further includes an interior (117) where a tray structure (118) is provided, **characterized in that** the tray structure (118) comprises at least two trays (118a, 118b, 118c) dividing said interior (117) into a number of sub-chambers (C1, C2, C3, C4) arranged at different levels for supplying watering liquid towards the inner cavity (115) at different heights through the first openings (116) formed in the outer pot (110).

2. The pot assembly (100) of claim 1, wherein the pot assembly (100) further includes an inner pot (130) provided with second openings (131), said inner pot (130) being suitable for being received into the inner cavity (115) of the outer pot (110) in communication therewith through said second openings (131).

3. The pot assembly (100) of claim 1 or 2, wherein it further comprises valve means (300) for allowing controlled supply of watering liquid from the interior (117) of the outer pot (110) to the inner cavity (115).

4. The pot assembly (100) of claim 3, wherein the valve means (300) are provided in the outer pot (110).

5. The pot assembly (100) of claim 4, wherein the valve means (300) comprise a drop-by-drop valve (310).

6. The pot assembly (100) of any of the claims 3 to 5, wherein the valve means (300) comprise at least one tongue (311) adapted for allowing passage of watering liquid into the inner cavity (115) when the inner pot (130) is at least partially inserted into the inner cavity (115).

7. The pot assembly (100) of claim 6, wherein the tongue (311) comprises a first length (311 a) and a second length (311 b), the second length (311 b) being adapted for being folded on the first length (311 a) as the inner pot (130) is inserted into the inner cavity (115) of the outer pot (110) causing the inner and outer pots (130, 110) to be in fluid communication with each other so that watering liquid is delivered from sub-chambers (C1-C4) to the inner pot (130).

8. The pot (100) assembly of any of the preceding claims, wherein the outer pot (110) further comprises watering liquid adjusting means (150) for controlling the amount of watering liquid supplied into each sub-chamber (C1, C2, C3, C4).

9. The pot assembly (100) of claim 8, wherein the watering liquid adjusting means (150) comprise a hollow member (151) having an inlet (141) for filling of outer pot (110) with watering liquid, the hollow member (151) projecting into the inside (117) of the outer pot (110) and being provided with outlets (155) communicating at least some of the sub-chambers (C1, C2, C3, C4) with each other, the hollow member (151) being capable of being raised and lowered to adjust the height at which the outlets (155) are provided such that watering liquid supplied from each sub-chamber (C1, C2, C3, C4) is adjusted.

10. The pot assembly (100) of any of the preceding claims, wherein the outer pot (110) is provided with a top cover (140).

11. The pot assembly (100) of claim 10, wherein the top cover (140) is provided with a threaded projection (143) on which the hollow member (151) is screwed.

12. The pot assembly (100) of any of the claims 8-11, wherein the watering liquid adjusting means (150) are further provided with a drain valve (154) for enabling or disabling the supply of watering liquid to the sub-chambers (C1, C2, C3, C4) as desired.

13. The pot assembly (100) of any of the preceding claims, wherein it further comprises a level indicator (160).

14. The pot assembly (100) of any of the preceding claims, wherein it further comprises at least one liquid reservoir chamber (114) formed at the bottom of the outer pot (110).

15. The pot assembly (100) of any of the preceding claims, wherein it further includes an outer support member (120) arranged for receiving the outer pot (110).

16. The pot assembly (100) of any of the preceding claims, wherein the outer pot (110) a number of outer walls (110a, 110b, 110c, 110d) articulated on corresponding hinge shafts (119a, 119b).

## Patentansprüche

1. Selbstbewässerungstopfanordnung (100) für Pflanzen (200), wobei die Topfanordnung einen äußeren Topf (110) mit mindestens einer inneren Aushöhlung (115) umfasst, wobei der äußere Topf (110) eine Anzahl von ersten Öffnungen (116) hat, wobei der äußere Top (120) weiterhin einen Innenbereich (117) umfasst, in dem einen Wannenaufbau (118) vorhanden ist, **dadurch gekennzeichnet, dass** der Wannenaufbau (118) mindestens zwei Wannen (118a, 118b, 118c) umfasst, die den Innenbereich (117) in eine Anzahl von Teilkammern (C1, C2, C3, C4) aufteilen, die auf verschiedenen Ebenen angeordnet sind, um Bewässerungsflüssigkeit in die innere Aushöhlung (115) auf verschiedenen Höhen durch die ersten in dem äußeren Topf (110) gebildeten Öffnungen (116) zu zuführen.

2. Topfanordnung (100) nach Anspruch 1, wobei die Topfanordnung (100) weiterhin einen inneren Topf (130) versehen mit zweiten Öffnungen (131) umfasst, wobei der innere Topf (130) geeignet ist, um in die innere Aushöhlung (115) des äußeren Topfs (110) in Verbindung damit durch die zweiten Öffnungen (131) empfangen zu werden.

3. Topfanordnung (100) nach Anspruch 1 oder 2, wobei sie weiterhin ein Ventilmittel (300) umfasst, um eine kontrollierte Zufuhr der Bewässerungsflüssigkeit aus dem Innenbereich (117) des äußeren Topfs (110) in die innere Aushöhlung (115) zu ermöglichen.

4. Topfanordnung (100) nach Anspruch 3, wobei das Ventilmittel (300) im äußeren Topf (110) bereitgestellt ist.

5. Topfanordnung (100) nach Anspruch 4, wobei das Ventilmittel (300) einen Tropfer (310) umfasst.

6. Topfanordnung (100) nach einem der Ansprüche 3 bis 5, wobei das Ventilmittel (300) mindestens eine Zunge (311) umfasst, die angepasst ist, um den Durchfluss von Bewässerungsflüssigkeit in die innere Aushöhlung (115) zu ermöglichen, wenn der innere Topf (130) mindestens teilweise in der inneren Aushöhlung (115) eingesetzt ist.

7. Topfanordnung (100) nach Anspruch 6, wobei die Zunge (311) eine erste Länge (311 a) und eine zweite Länge (311 b) umfasst, wobei die zweite Länge (311 b) so angepasst ist, um auf der ersten Länge (311a) gefaltet zu werden, wenn der innere Topf (130) in die innere Aushöhlung (115) des äußeren Topfs (110) eingesetzt wird, was dazu führt, dass der innere und der äußere Topf (130, 110) in Fluidverbindung miteinander sind, so dass Bewässerungsflüssigkeit aus den Teilkammern (C1-C4) in den inneren Topf (130) zugeführt wird.

8. Topfanordnung (100) nach einem der vorhergehenden Ansprüche, wobei der äußere Topf (110) weiterhin ein Mittel (150) zur Regulierung der Bewässerung umfasst, um die Menge von Bewässerungsflüssigkeit zu kontrollieren, die in jede Teilkammer (C1, C2, C3, C4) zugeführt wird.

9. Topfanordnung (100) nach Anspruch 8, wobei das Mittel (150) zur Regulierung der Bewässerung ein hohles Element (151) umfasst, das einen Einlass (141) zur Füllung des äußeren Topfs (110) mit Bewässerungsflüssigkeit hat, wobei das hohle Element (151) in den Innenbereich (117) des äußeren Topfs (110) hineinragt und mit Auslässen (155) versehen ist, die mindestens mehrere der Teilkammern (C1, C2, C3, C4) miteinander verbindet, wobei das hohle Element (151) imstande ist, gehoben und abgesenkt zu werden, um die Höhe einzustellen, auf der die Auslässen (155) vorhanden sind, so dass die Bewässerung, die von jede Teilkammer (C1, C2, C3, C4) zugeführt wird, reguliert wird.

10. Topfanordnung (100) nach einem der vorhergehenden Ansprüche, wobei der äußere Topf (110) mit einer Abdeckung (140) versehen ist.

11. Topfanordnung (100) nach Anspruch 10, wobei die Abdeckung (140) mit einer Erhebung (143) mit Gewinde, an die das hohle Element (151) angeschraubt wird, versehen ist.

12. Topfanordnung (100) nach einem der Ansprüche 8-11, wobei das Mittel (150) zur Regulierung der Bewässerung weiterhin mit einem Ablassventil (154) versehen ist, um die Zufuhr von Bewässerungsflüssigkeit in die Teilkammern (C1, C2, C3, C4) nach Wunsch zu ermöglichen oder zu blockieren.

13. Topfanordnung (100) nach einem der vorhergehenden Ansprüche, wobei sie weiterhin eine Füllstandsanzeige (160) umfasst.

14. Topfanordnung (100) nach einem der vorhergehenden Ansprüche, wobei sie weiterhin mindestens eine Flüssigkeitsreservoirkammer (114) umfasst, die auf dem Unterteil des äußeren Topfs (110) gebildet ist.

15. Topfanordnung (100) nach einem der vorhergehenden Ansprüche, wobei sie weiterhin mindestens ein äußeres Stützelement (120) umfasst, das angeordnet ist, um den äußeren Topf (110) zu empfangen.

16. Topfanordnung (100) nach einem der vorhergehenden Ansprüche, wobei der äußere Topf (110) eine Anzahl von äußeren Wandungen (110a, 110b, 110c, 110d) umfasst, die um entsprechende Gelenkwellen (119a, 119b) gelenkig sind.

## Revendications

1. Ensemble (100) de pot à arrosage automatique pour plantes (200), comprenant ledit ensemble de pot un pot extérieur (110) ayant au moins une cavité intérieure (115), ayant le pot extérieur (110) un nombre de premières ouvertures (116), dans lequel le pot extérieur (120) inclut en outre un intérieur (117) dans lequel une structure (118) de plateaux est fournie, **caractérisé en ce que** la structure (118) de plateaux comprend au moins deux plateaux (118a, 118b, 118c) divisant ledit intérieur (117) dans un nombre de sous-chambres (C1, C2, C3, C4) disposées à différents niveaux afin de fournir du liquide d'arrosage vers la cavité intérieure (115) à des hauteurs différentes à travers les premiers ouvertures (116) formées dans le pot extérieur (110).

2. L'ensemble (100) de pot de la revendication 1, dans lequel l'ensemble (100) de pot comprend en outre un pot intérieur (130) fourni avec des deuxièmes ouvertures (131), étant ledit pot intérieur (130) apte à être reçu dans la cavité intérieure (115) du pot extérieure (110) en communication avec le même à travers lesdites deuxièmes ouvertures (131).

3. L'ensemble de pot (100) de la revendication 1 ou 2, comprenant en outre un moyen (300) de vanne pour permettre un apport contrôlé de liquide d'arrosage de l'intérieur (117) du pot extérieur (110) à la cavité intérieure (115).

4. L'ensemble de pot (100) de la revendication 3, dans lequel le moyen (300) de vanne est fourni dans le pot extérieur (110).

5. L'ensemble de pot (100) de la revendication 4, dans lequel le moyen (300) de vanne comprend une vanne goutte à goutte (310).

6. L'ensemble de pot (100) de l'une quelconque des revendications 3 à 5, dans lequel le moyen (300) de vanne comprend au moins une languette (311) adaptée pour permettre l'écoulement de liquide d'arrosage dans la cavité (115) intérieure lorsque le pot intérieur (130) est au moins partiellement inséré dans la cavité intérieure (115).

7. L'ensemble de pot (100) de la revendication 6, dans lequel la languette (311) comprend une première longueur (311 a) et une deuxième longueur (311 b), étant la deuxième longueur (311b) adaptée pour être pliée sur la première longueur (311a) lorsque le pot intérieur (130) est inséré dans la cavité intérieure (115) du pot extérieur (110), ce qui fait que les pots intérieur et extérieur (130, 110) soient en communication fluidique l'un avec l'autre de façon que du liquide d'arrosage est alimenté des sous-chambres (C1-C4) au pot intérieur (130).

8. L'ensemble (100) de pot de l'une quelconque des revendications précédentes, dans lequel le pot extérieur (110) comprend en outre un moyen (150) de régulation de liquide d'arrosage pour contrôler la quantité de liquide d'arrosage alimenté à chaque sous-chambre (C1, C2, C3, C4).

9. L'ensemble (100) de pot de la revendication 8, dans lequel le moyen (150) de régulation de liquide d'arrosage comprend un élément creux (151) ayant une ouverture (141) d'admission pour remplir le pot extérieur (110) de liquide d'arrosage, faisant l'élément creux (151) saillie dans l'intérieur (117) du pot extérieur (110) et étant fourni avec des orifices (155) de sortie communiquant au moins quelques de sous-chambres (C1, C2, C3, C4) l'une avec l'autre, étant l'élément creux (151) capable d'être élevé ou abaissé afin d'ajuster la hauteur à laquelle les orifices (155) de sortie sont fournis de façon que l'on régule le liquide d'arrosage provenant de chaque sous-chambre (C1, C2, C3, C4).

10. L'ensemble (100) de pot de l'une quelconque des revendications précédentes, dans lequel le pot extérieur (110) est pourvu d'un couvercle supérieur (140).

11. L'ensemble (100) de pot de la revendication 10, dans lequel le couvercle supérieur (140) est pourvu d'une saillie filetée (143) sur laquelle l'élément creux (151) est vissé.

12. L'ensemble (100) de pot de l'une quelconque des revendications 8-11, dans lequel le moyen (150) de régulation de liquide d'arrosage est pourvu en outre d'une vanne (154) de vidange pour permettre ou empêcher à souhait l'alimentation de liquide d'arrosage aux sous-chambres (C1, C2, C3, C4).

13. L'ensemble (100) de pot de l'une des revendications précédentes, comprenant en outre un jauge (160) de niveau.

14. L'ensemble (100) de pot de l'une quelconque des revendications précédentes, comprenant en outre au moins une chambre - réservoir (114) de liquide formée sur le fond du pot extérieur (110).

15. L'ensemble (100) de pot de l'une quelconque des revendications précédentes, comprenant en outre un élément (120) de support extérieur adapté pour recevoir le pot extérieur (110).

16. L'ensemble (100) de pot de l'une quelconque des revendications précédentes, dans lequel le pot extérieur (110) comprend un nombre de parois extérieures (110a, 110b, 110c, 110d) articulées autour d'articulations d'arbre (119a, 119b).
